# EUROPÄISCHE PATENTSCHRIFT

(11) **EP 2 288 898 B1**
(45) Veröffentlichungstag und Bekanntmachung des Hinweises auf die Patenterteilung: **12.08.2015**
(21) Anmeldenummer: 09761697.3
(22) Anmeldetag: 08.06.2009
(51) Int. Cl.: G01N 1/22, G01N 13/00

(54) **VORRICHTUNG UND VERFAHREN ZUR ERMITTLUNG DER EIGENSCHAFTEN VON AEROSOLFORMULIERUNGEN**
DEVICE AND METHOD FOR DETERMINING THE PROPERTIES OF AEROSOL FORMULATIONS
DISPOSITIF ET PROCÉDÉ DE DÉTERMINATION DES PROPRIÉTÉS DE FORMULATIONS D'AÉOROLS

(30) Priorität: 09.06.2008 EP 08104315
(43) Veröffentlichungstag der Anmeldung: 02.03.2011
(73) Patentinhaber: Boehringer Ingelheim International GmbH, 55216 Ingelheim am Rhein (DE)
(72) Erfinder: EGEN, Marc, 55216 Ingelheim am Rhein (DE); CARTIER, Regis, 55216 Ingelheim am Rhein (DE); KRUEGER, Michael, 55216 Ingelheim am Rhein (DE)
(74) Vertreter: Simon, Elke Anna Maria
(86) Internationale Anmeldenummer: PCT/EP2009/057056
(87) Internationale Veröffentlichungsnummer: WO 2009/150134

(56) Entgegenhaltungen:
- RILEY T ET AL: "In Vitro Method for Determining the Dissolution Rate of Inhalation Aerosols" 15. Mai 2008 (2008-05-15), RESPIRATORY DRUG DELIVERY, XX, XX, PAGE(S) 541 - 544 , XP008099300 Seite 541 - Seite 542
- R.O. SALAMA ET AL.: EUROPEAN JOURNAL OF PHARMACEUTICS AND BIOPHARMACEUTICS, Bd. 70, 7. April 2008 (2008-04-07), Seiten 145-152, XP002506986
- N.M. DAVIES ET AL.: INTERNATIONAL JOURNAL OF PHARMACEUTICS, Bd. 255, 28. Januar 2003 (2003-01-28), Seiten 175-187, XP002506987
- SIVADAS N ET AL: "A comparative study of a range of polymeric microspheres as potential carriers for the inhalation of proteins" INTERNATIONAL JOURNAL OF PHARMACEUTICS, ELSEVIER BV, NL, Bd. 358, Nr. 1-2, 22. März 2008 (2008-03-22), Seiten 159-167, XP022698723 ISSN: 0378-5173 [gefunden am 2008-03-22]
- CHENG Y-H ET AL: "Development of a novel nasal nicotine formulation comprising an optimal pulsatile and sustained plasma nicotine profile for smoking cessation" JOURNAL OF CONTROLLED RELEASE, ELSEVIER, AMSTERDAM, NL, Bd. 79, Nr. 1-3, 19. Februar 2002 (2002-02-19), Seiten 243-254, XP004340929 ISSN: 0168-3659
- EL-HAMEED M D A ET AL: "Preparation and in vitro characterisation of mucoadhesive polymeric microspheres as intra-nasal delivery systems" EUROPEAN JOURNAL OF PHARMACEUTICS AND BIOPHARMACEUTICS, ELSEVIER SCIENCE PUBLISHERS B.V., AMSTERDAM, NL, Bd. 44, Nr. 1, 1. Juli 1997 (1997-07-01), Seiten 53-60, XP004256900 ISSN: 0939-6411
- MCCONVILLE J T ET AL: "Use of a novel modified TSI for the evaluation of controlled-release aerosol formulations" DRUG DEVELOPMENT AND INDUSTRIAL PHARMACY, NEW YORK, NY, US, Bd. 26, Nr. 11, 1. Januar 2000 (2000-01-01), Seiten 1191-1198, XP008098978 ISSN: 0363-9045

## Beschreibung

Die Erfindung bezieht sich auf eine Vorrichtung zur Ermittlung der Lösungsgeschwindigkeit und Freisetzungskinetik einer Aerosolformulierung und ein entsprechendes Verfahren dazu.

Im Folgenden handelt sich um die Prüfung von pharmazeutischen Formulierungen zur Inhalation in vitro. Im Speziellen geht es um die Evaluierung des Auflösungs- bzw. Freisetzungsverhaltens von Arzneimitteln, die nach der Inhalation in der Lunge deponieren. Weiterhin geht es um die Evaluierung solcher Formulierungen, die im Lungengewebe als Feststoff für einen deutlich längeren Zeitraum bestehen als die gelöste Form der enthaltenen Stoffe. Bisher werden für Inhalanda so genannte Lösemodelle (engl: "dissolution test") verwendet, die entweder als geschlossenes System (Bechermethode, Drehkörbchenmethode, Blattrührerapparatur) oder als offenes System (Durchflussmethode) betrieben werden. Als Freisetzungsmedium wird in der Regel eine wässrige Lösung verwendet, die die physiologische Umgebung des Zielorgans simulieren soll. Der Wirkstoff wird zu definierten Zeitpunkten aus der Freisetzungsapparatur entnommen und analytisch bestimmt.

Nach einer Inhalation deponieren die Partikel in unterschiedlichen Lungenbereichen in Abhängigkeit ihrer aerodynamischen Eigenschaften. Haupteinflussgrößen sind die Partikelgröße, die Partikelmorphologie und die Partikelporosität. Für inhalative Anwendungen werden beispielsweise 1-5µm große Partikel für eine Deposition im alveolaren Bereich hergestellt.

Nicht wasserlösliche feste Formulierungen aggregieren im Freisetzungsmedium abhängig von ihrer Konzentration innerhalb von Minuten zu größeren Strukturen (~ 100µm bis einige mm), die unter Umständen zusätzliche Lufteinschlüsse enthalten. Diese bilden zusätzliche Diffusionsbarrieren und beeinflussen dadurch das Auflösungs- bzw. Freisetzungsverhalten der Formulierung. Eine dramatische apparente Verlangsamung der Freisetzung ist die Folge. Die derzeitigen Systeme erlauben keine Aussage über das tatsächliche Freisetzungsverhalten von schwerlöslichen Partikeln für die Inhalation.

Darüber hinaus führen die meisten Partikelherstellungsverfahren zu Partikelmischungen mit einer relativ breiten Größenverteilung. Lediglich der so genannte Feinanteil der Mischung deponiert während der Inhalation in der Lunge, während ein wesentlicher Anteil (ca. 30-70%) der Mischung im Rachenraum impaktiert und für eine topologische Applikation der Lunge therapeutisch unwirksam ist. Da das Freisetzungsverhalten auch von der Partikelgröße beeinflusst wird, führt der therapeutisch unwirksame Anteil zu einer apparenten Verzögerung der Wirkstofffreisetzung in vitro. Die derzeit verwendeten Systeme erlauben keine Trennung des Feinanteils von der Gesamtpopulation der Partikel, so dass eine Aussage über den Feinanteil schwierig ist.

Zusammengefasst sind derzeit keine standardisierten Prüfsysteme verfügbar, die die Untersuchung des Freisetzungsverhaltens von Inhalanda ermöglichen, in denen der Feinanteil berücksichtigt wird und bei denen die Partikel in dispergierter Form in Kontakt mit dem Freisetzungsmedium gebracht werden.

Des Weiteren beinhaltet die Bestimmung des Wirkstoffs meist eine aufwendige Analytik, häufig mittels Hochleistungsflüssigkeitschromatographie (HPLC).

Darüber hinaus liegen die Partikel im Freisetzungsmedium submergiert vor. In der Lunge liegen die Partikel hingegen auf einer Grenzschicht zwischen dem Lungenfluid und der Gasphase (Air-Liquid-Interface). Kürzlich publizierte Ergebnisse zeigen, dass sich das Freisetzungsverhalten von Feststoffformulierungen im Air-Interface-Modell anders verhält als im Liquid-Liquid-Interface-System.

Folgende kürzlich als Konferenzbeiträge (Poster) publizierte Arbeiten zeigen Lösungsansätze zu den beschriebenen Nachteilen:
- T. Riley et al., Respiratory Drug Delivery, 2008: Eine Filtermembran wurde auf einer Stage-Platte eines NGIs (engl: "New Generation Impactor") fixiert. Eine Trockenpulverformulierung wurde danach über einen MDI (engl: "metered-dose inhaler") in den NGI ausgebracht. Die Stage-Platte und die Luftstrombedingungen wurden so ausgewählt, dass als Ergebnis eine Deposition von 4,46µm Partikeln auf der Membran erreicht wurde. Die Membran wurde danach in eine Dissolution-Zelle gebracht und im Durchflussmodus mit simuliertem Lungenfluid durchströmt. Der freigesetzte Wirkstoff wurde dann über einen Probennehmer und nachgeschaltete Analytik bestimmt. Dieser Aufbau erlaubt die Untersuchung des Feinanteils, vorausgesetzt dass das Einbringen der Membran auf die Stage-Platte den Betrieb des NGI nicht verändert.

Als nachteilig ist hier anzusehen, dass der Betrieb ausschließlich im Durchflussmodus möglich ist.
- Y.J. Son et al., Respiartory Drug Delivery, 2008: auch dieser Aufbau umfasst die Verwendung des NGIs. In diesem Fall wurde die Filtermembran nach dem Depositionsversuch in ein Gefäß gebracht und in einem geschlossenen Dissolutions-Test, wie oben beschrieben, zur Messung der Wirkstofffreisetzung verwendet.

Es ist Aufgabe der Erfindung, eine Vorrichtung zur Ermittlung der Lösungsgeschwindigkeit und Freisetzungskinetik von Aerosolformulierungen zu schaffen, mit der eine Wirkstoffkonzentration kontinuierlich und während des Freisetzungsprozesses gemessen werden kann. Weiterhin soll ein entsprechendes Verfahren angegeben werden.

Erfindungsgemäß wird die Aufgabe bei einer Vorrichtung entsprechend den Merkmalen des Anspruchs 1 und bei einem Verfahren mit den Merkmalen nach Anspruch 8 gelöst.

Bei der Vorrichtung ist zunächst ein vorzugsweise handelsüblicher Inhalator vorgesehen, mit dem im normalen Betrieb auch eine Person einen Wirkstoff aufnimmt. Dies kann beispielsweise ein tragbarer Inhalator sein, wie er unter dem Markennamen HandiHaler^{®} bekannt ist. Mit Hilfe des Inhalators wird eine Trockenpulverformulierung derart dispergiert, dass ein Trockenpulver-Aerosol entsprechend einer humanen Anwendung erhalten wird.

In einer weiteren Ausführungsform ist auch die Verwendung eines Inhalators für Anwendungen am Tier umfasst, z.B ein Inhalators des Typs Dry Powder Inssuflator DP4^{®} der Firma Penncentury.

Weiterhin ist ein Kaskadenimpaktor, beispielsweise der Firma Anderson Samplers, Atlanta, USA, vorgesehen. Bei einem Kaskadenimpaktor wird über hintereinander geschaltete Düsenplatten mit sich jeweils reduzierendem Düsendurchmesser und zwischen den Düsenplatten angeordneten Prallflächen ein staubbeladender Gasstrom gefiltert. Durch die Querschnittsverengungen wird die Gasgeschwindigkeit erhöht. Während feine Teilchen bei kleinen Geschwindigkeiten noch dem Gasstrom folgen, werden größere Teilchen oder Partikel an der Filterscheibe abgeschieden. Somit werden einzelne Fraktionen mit jeweils unterschiedlichen Partikelgrößen erhalten. Zum Schluss dient eine Membran zum Auffangen der verbleibenden, noch nicht abgeschiedenen Partikel, wobei die Membran in Strömungsrichtung gesehen vor der Filterplatte angeordnet ist. Somit werden Partikel einer bestimmten Größe aus einer Gesamtpopulation der Partikel auf der Membran erhalten, vorzugsweise der Feinanteil der Gesamtpopulation, und auf der Membran immobilisiert. Prinzipiell könnte auch die Gesamtzahl aller Teilchen in dispergierter Form auf der Membran immobilisiert werden.

Die Abscheidung des inhalierbaren Anteils kann bevorzugt dadurch erfolgen, dass dieser Filter auf die Filterplatte des Andersen-Kaskadenimpaktors eingesetzt wird. Die Ausbringung erfolgt dann in Anlehnung an Pharm. Eur. 2.9.18 (European Pharmacopoeia, 6th edition 2008, Apparatus D - Andersen Cascade Impactor), wobei ausschließlich die Abscheideplatten in den Kaskadenimpaktor eingelegt sind, die nicht zum Abscheiden der Partikel von 0 µm bis 5 µm dienen, so dass gesamthaft alle Partikel kleiner 5µm auf dem Filter abgeschieden werden.

Schließlich wird mit Hilfe eines Luft-Flüssigkeits-Modell-Systems die Membran in Kontakt mit einem Freisetzungsmedium gebracht und eine Wirkstoffkonzentration kontinuierlich und während des Freisetzungsprozesses mit Hilfe einer Einrichtung zur Messdatenerfassung überwacht. Dabei sind die auf der Membran immobilisierten Partikel während des Kontakts mit dem Freisetzungsmedium keinen weiteren Kräften, wie Scherkräften, mechanischen Kräften und dergleichen, ausgesetzt und liegen entsprechend der Situation in vivo an einer Luftgrenzschicht an.

Der Vorteil der Erfindung besteht darin, dass eine Partikelfraktion in Bezug auf Auflösungs- oder Freisetzungsverhalten geprüft werden kann, die aus einem Inhalator tatsächlich in der Lunge eines Menschen deponieren würde. Das Luft-Flüssigkeits-Modellsystem simuliert dabei die Depositionsumgebung der Lunge und es erfolgt mit Hilfe der Einrichtung eine kontinuierliche Messdatenerfassung, so dass der analytische Aufwand des Prüfverfahrens gegenüber dem Stand der Technik deutlich verringert ist. Beispielsweise können pharmazeutische Aerosolformulierungen in der Forschungs- und Entwicklungsphase sowie in der Herstellung überprüft und lungendrucktoxikologische Untersuchungen mit Partikeln aus der Umwelt durchgeführt werden.

Selbstverständlich können im Prinzip beliebige Partikel oder medizinisch wirksame Stoffe oder Stoffgemische untersucht werden. Weiterhin kann das Verbringen der Partikel aus einem Inhalator mit Hilfe eines Kaskadenimpaktors auf eine Membran räumlich getrennt von der eigentlichen Untersuchung der Membran mittels des Luft-Flüssigkeits-Modells erfolgen oder in einer einzigen gemeinsamen Vorrichtung mit einem beispielsweise automatisierten Transfer der Membrane aus dem Kaskadenimpaktor in ein Luft-Flüssigkeits-Modell.

Mittels des Kaskadenimpaktors wird innerhalb der verschiedenen Düsen oder Stufen nicht in einen Partikelauftrennungsprozess eingegriffen, wodurch die tatsächlich an der Membran abgeschiedenen Partikel nicht beeinflusst sind. Die Immobilisierung der Partikel auf der Membran bleibt auch während des Freisetzungsprozesses im Modellsystem in das Freisetzungsmedium hinein aufrecht erhalten, da die Partikel keinen zusätzlichen Kräften ausgesetzt sind. Innerhalb des Luft-Flüssigkeits-Modellsystems werden die gleichen Verhältnisse wie in einer Lunge eines Patienten simuliert, da die Partikel an einer Flüssigkeits-Luft-Grenzschicht anliegen. Somit werden die Partikel keiner Veränderung unterworfen, außer derjenigen bei der Auflösung im Freisetzungsmedium. Schließlich ist eine kontinuierliche Messdatenerfassung möglich.

Die Membran, auf der die Partikel im Kaskademimpaktor abgeschieden werden, und die geeignet ist, dass diese im Luft-Flüssigkeits-Modellsystem verwendet werden kann, zeichnet sich dadurch aus, das sie aus einem Material ist, das mit Wasser benetzbar ist. Im besonderen ist eine Membran erfindungsgemäß geeignet, wenn diese hydrophile Eigenschaft aufweist und nicht wasserlöslich ist. Unter hydrophilen Filtermaterialien werden dabei Materialien verstanden, die eine hohe Affinität zu Wasser aufweisen, sich mit praktisch jeder Flüssigkeit benetzen lassen und für wässrige Lösungen verwendet werden können. Hydrophile Filtermaterialien sind in bevorzugter Art und Weise ausgewählt aus der Gruppe bestehend aus Acryl-Copolymer, Polyethylensulfon, Polysulfon, Zellulose, Zellulosederivate, Zelluloseester und regenerierte Zellulose. Nicht geeignet sind Membranen aus einem hydrophoben Filtermaterial.

Die Membran ist darüber hinaus gekennzeichnet, dass sie eine maximale Dicke von 100 µm, bevorzugt von 80 µm aufweist. Weiterhin ist die Membran dadurch charakterisiert, dass diese in einem wässrigen Medium keine Eigentrübung bedingt. Im besonderen zeichnet sich die Membran aus, dass sich keine Faserfragmente aus der Membran lösen. Unter der Eigenschaft "Trübung in einem wässrigen Medium zu bedingen" versteht man, dass eine Schwächung einer durchgehenden Lichtstrahlung durch Wasser, welches mit dem Filtermaterial intensiv in Kontakt stand, auftritt.

Überaschenderweise hat sich gezeigt, dass neben Filtermaterialien (Membran), die aus einem hydrophoben Material sind auch Filtermaterialien, die eine Glasfasermembran darstellen, ungeeignet sind

Es hat sich gezeigt, dass sich Filtermaterialien *nicht* eignen, wenn diese aus Glasfaser, Teflon (PTFE) und Polyvenylidenfluorid hergestellt sind.

Geeignete Membranen zeichnen sich dadurch aus, dass diese eine Gasdurchlässigkeit von 80 Liter pro Minute aufweisen.

Erfindungsgemäß ermöglichen die Membranen, dass diese einerseits zur Abscheidung der Partikel im Kaskadenimpaktor verwendet werden können, und andererseits direkt im Luft-Flüssigkeits-Modellsystem verwendet werden kann. Hierbei zeichnet sich die Membran dadurch aus, dass die Partikel nicht nur oberflächlich auf der Membran abgeschieden sind, sondern in der Filtermembran immobilisiert vorliegen. Das Vorliegen der Partikel in einer immobilisierten Form in der Membran zeigt sich darin, dass die Filtermembran ohne weitere Maßnahmen direkt in dem Luft-Flüssigkeits-Modellsystem eingesetzt werden können.

Bevorzugt wird als Material für die Membran Zellulose und Zellulosederivate, im besonderen Zellulose und regenerierte Zellulose, insbesondere regenerierte Zellulose, eingesetzt und anstelle eines üblicherweise vorgesehenen Filters auf der Filterplatte des Kaskadenimpaktors angeordnet. Dieses Zellulose-Material dient zur praktisch vollständigen Immobilisierung der herausgefilterten Partikel.

Im Weiteren wird der Kaskadenimpaktor entsprechend eines menschlichen Atemzugs betrieben, beispielsweise mit einem Luftstrom von 39 Litern pro Minute über einen Zeitraum von 6,15 Sekunden, um die bei einer tatsächlichen Inhalation eingeatmete Luftmenge mit den aus dem Inhalator dispergierten Wirkstoffen möglichst identisch zu simulieren.

Hierzu wird die Membran in einer vorteilhaften Ausgestaltung derart gewählt, dass sie einen Luftstrom von mindestens 20 Litern pro Minute erlaubt, insbesondere 30 Liter pro Minute, desweiteren bevorzugt 39 Liter pro Minute. Die Membran weist eine Porengröße auf, die das Auffangen von Partikeln erlaubt, vorzugsweise mit einem Porendurchmesser vom 0,45µm. Ein derartiges Membranmaterial ist mit einer wässrigen Lösung leicht benetzbar und chemisch in wässriger Lösung inert und geht üblicherweise auch keine Wechselwirkungen mit einer Formulierung ein.

Nach einer Weiterbildung wird als Luft-Flüssigkeits-Modellsystem ein Zwei-Kammernsystem verwendet, vorzugsweise eine Diffusionszelle nach Franz. Dabei wird ein unteres Kompartiment mit einem an sich beliebig wählbaren Freisetzungsmedium gefüllt und die Membran auf die Oberfläche des Mediums aufgelegt, wodurch keine Lufteinschlüsse mehr zwischen dem Freisetzungsmedium und der Membran vorhanden sind. Der obere Teil der Zelle verschließt das System und bildet ein Luftkompartiment.

Bei einer derartigen Ausführungsform ist das untere Kompartiment mit Schläuchen an eine Pumpe angeschlossen, die das Medium zu einer Einrichtung zur Messdatenerfassung leiten, beispielsweise ein UV-Detektor oder ein Fluoresenz-Detektor. Mit derartigen Detektoren kann ein Wirkstoff quantitativ erfasst werden. Selbstverständlich ist die gesamte Vorrichtung vorzugsweise elektronisch gesteuert.

Weiterhin ist das Luft-Flüssigkeits-Modellsystem bevorzugt temperierbar ausgebildet, um eine Körpertemperatur innerhalb der Lunge zu simulieren.

Schließlich wird das Freisetzungsmedium mit einem Rührsystem, wie einem Magnetrührer, durchmischt, um einen im Freisetzungsmedium aufgenommen Wirkstoff innerhalb der Kammer besser zu verteilen.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

Die Erfindung wird im Folgenden anhand eines Ausführungsbeispieles unter Bezugnahme auf die zugehörigen Zeichnungen näher erläutert. Es zeigt:

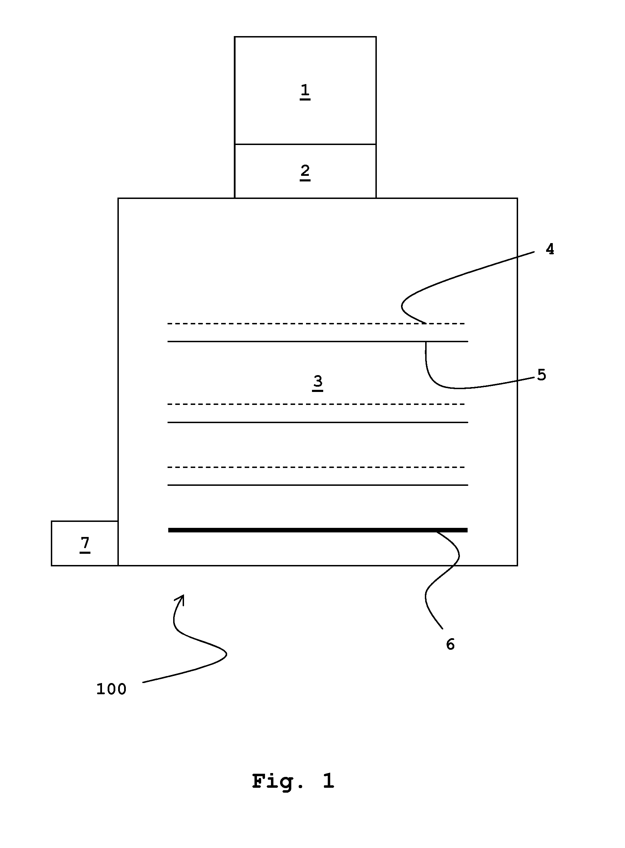

- Fig.1: einen Inhalator mit einem Kaskadenimpaktor der erfindungsgemäßen Vorrichtung,
- Fig.2: eine Franzzelle der Vorrichtung
- Fig.3: zwei Messwertdiagramme.

Die Vorrichtung 100 zur Ermittlung der Lösungsgeschwindigkeit und Freisetzungskinetik von Aeorosolformulierungen umfasst einen Inhalator 1, bei dem es sich um einen unter dem Markennamen handelsüblichen HandiHaler handelt, dessen Mundstück in eine entsprechende Aufnahme oder einen Adapter 2 eines Kaskadenimpaktors 3 eingesetzt ist. Durch die verschiedenen gestrichelten Linien 4 sind die Düsen und durch die durchgezogenen Linien 5 die Düsenplatten der nacheinander angeordneten Stufen (engl.: "stages") des Kaskadenimpaktors 3 wiedergegeben. An der untersten Stufe des Kaskadenimpaktors 3 erfolgt eine Abscheidung bzw. Immobilisierung von noch nicht herausgefilterten Partikeln mit Hilfe einer Membran 6, vorzugsweise aus regenerierter Zellulose. Selbstverständlich wird ein entsprechender Unterdruck über einen Vakuumanschluss 7 erzeugt, um den Kaskadenimpaktor 3 bzw. den Inhalator 1 möglichst mit dem gleichen Atemvolumen wie eines Menschen zu betreiben.

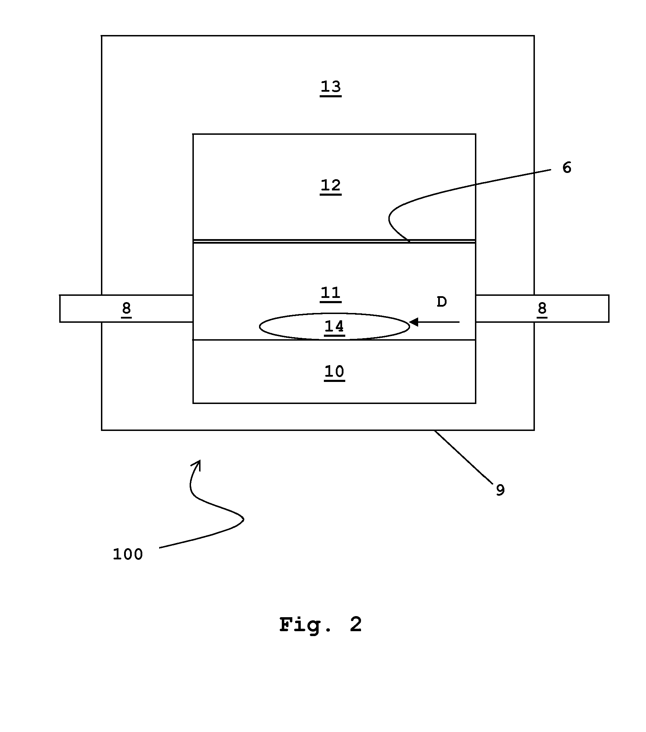

Nachfolgend wird die Membran 6 in einer Diffusionszelle 13 nach Franz angeordnet, wie sie in Fig. 2 wiedergegeben ist, die ein Teil der Vorrichtung 100 bildet, wobei unterhalb der Membran 6 ein erstes Kompartiment 11 zur Aufnahme eines flüssiges Freisetzungsmediums luftblasenfrei angeordnet ist, das kontinuierlich, wie durch die Anschlüsse 8 sowie den Durchflusspfeil D angedeutet, umgesetzt und einer Einrichtung zur Messdatenerfassung, wie einem UV- oder Fluoreszenz-Detektor, zugeführt wird. Oberhalb der Membran 6 ist als zweites Kompartiment 12 eine Luftkammer ausgebildet und die gesamte Diffusionszelle 13 (Franzzelle) ist von einer Wärmeisolierung 9 umgeben und kann über eine Heizplatte 10 in gewünschter Weise temperiert werden. Zur Durchmischung des Freisetzungsmediums dient ein Magnetrührer 14.

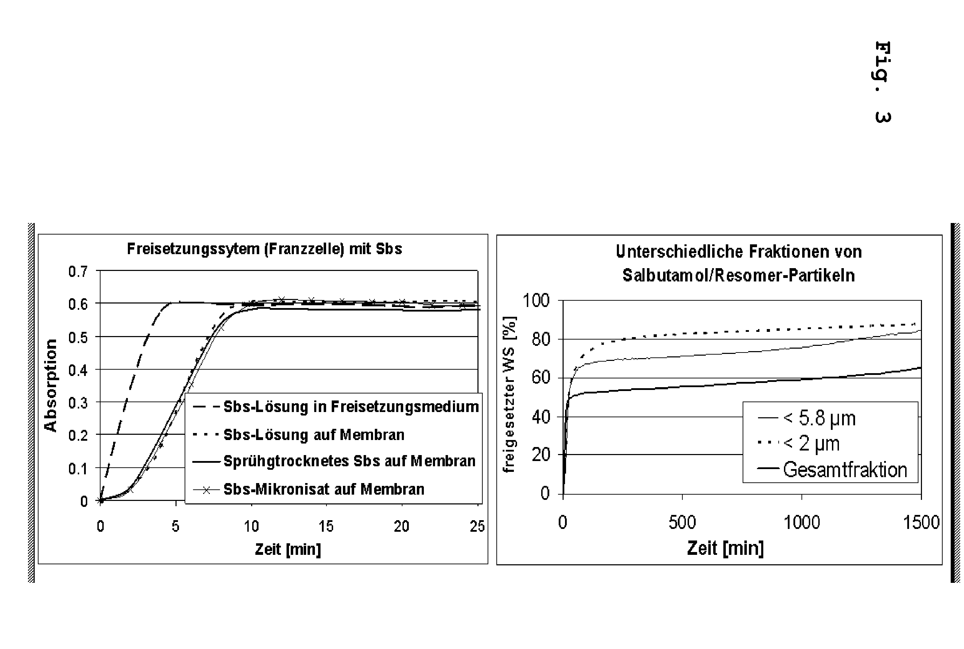

Zur Charakterisierung des Systems wurde zunächst Salbutamolsulfat als Modellwirkstoff als verdünnte Lösung direkt in das Freisetzungsmedium (PBS, phosphate buffered saline) gegeben und im Photometer bei 225nm gemessen. Das linke Diagramm nach Fig. 3 zeigt, dass nach etwa vier Minuten Inkubationszeit das Plateau der Wirkstoffkonzentration erreicht ist. Auf die Membran 6 gebrachtes Salbutamolsulfat erreicht die Maximalkonzentration nach etwa zehn Minuten. Dies bedeutet, dass die Membran 6 eine Diffusionsbarriere von etwa sechs Minuten darstellt. Das Gesamtsystem besitzt eine Reaktionszeit von etwa zehn Minuten, d.h. Konzentra-tionsänderungen durch freigesetzten Wirkstoff werden mit zehn Minuten Verzögerung erfasst. In der Zeitskala eines typischen Freisetzungsversuchs von 24 Stunden kann diese Verzögerung vernachlässigt werden.

Danach wurden sprühgetrocknete Salbutamolsulfat-Retardpulverpartikel als Testformulierung ohne zusätzliche Kaskadenimpaktorstage auf eine Membran 6 dispergiert und die Wirkstofffreisetzung in dem Freisetzungssystem untersucht.

Wie in dem rechten Diagramm nach Fig. 3 zu sehen ist, wurde bei einer Untersuchung einer Gesamtfraktion ein Burst Drug Release von 50% gemessen und eine verzögerte Freisetzung von über 24 Stunden beobachtet. Durch das Einfügen von geeigneten Kaskadenimpaktorplatten wurden danach Partikel <2µm und <5,8µm in Bezug auf kontrollierte Freisetzung untersucht, wie ebenfalls im rechten Diagramm abgebildet. Als Ergebnis ist eine deutliche Größenabhängigkeit in der Freisetzungskinetik erkennbar: Die kleineren Partikel setzen den Wirkstoff schneller frei. Da die Partikelherstellungsmethode mit dem verwendeten Sprühtrockner Partikel unter 1µm durch den Einsatz des Zyklons ausschließt, kann die Fraktion <5,8µm mit dem Feinanteil der Population gleichgesetzt werden.

Zusammengefasst zeigen die Ergebnisse, dass sich dieser Messaufbau für eine online-Messung über mindestens 24 Stunden eignet, dispergierte Partikel auf der Membran 6 immobilisiert werden und Partikelmischungen unterschiedlichen aerodynamischen Durchmessers unterschieden werden können.

Für die Messdatenerfassung wird zunächst der Inhalator 1 über den Adapter 2 an den Kaskadenimpaktor 3 angeschlossen und ein zu überprüfendes Aeorsol auf der Membran 6 im Kaskadenimpaktor 3 immobilisiert. Die Membran 6 wird in die Diffusionszelle 13 nach Franz verbracht, die von der Wärmeisolierung 9 umgeben ist. Die als Zu- und Abflüsse ausgebildeten Annschlüsse 8 dienen dazu, ein hindurchgefördertes Freisetzungsmedium der Einrichtung zur Messdatenerfassung, wie einem UV-Detektor, zuzuführen.

## Patentansprüche

1. Vorrichtung zur Ermittlung der Lösungsgeschwindigkeit und Freisetzungskinetik von Aerosolformulierungen, umfassend
(i) einen Kaskadenimpaktor, eine Membran und einen Inhalator (1), der an den Kaskadenimpaktor (3) angeschlossen ist, wobei die Membran (6) auf einer Filterplatte des Kaskadenimpaktors (3) angeordnet ist und die Membran (6), nachdem diese mit Partikeln im Kaskadenimpaktor beladen wurde, in ein Luft-Flüssigkeits-Modellsystem eingesetzt wird, so dass die Membran, in Kontakt mit einem Freisetzungsmedium ist,
(ii) und ein Luft-Flüssigkeits-Modellsystem, welches ein Zwei-Kammersystem ist, insbesondere eine Diffusionszelle (13) nach Franz, die eine Einrichtung zur Erfassung von Messdaten aufweist,
**dadurch gekennzeichnet, dass**
die Membran (6) aus einem hydrophilen Material besteht, welches ausgewählt ist aus der Gruppe bestehend aus Acryl-Copolymer, Polyethylensulfon, Polysulfon, Zellulose, Zellulosederivate, Zelluloseester und regenerierte Zellulose,
und die Membran eine maximale Dicke von 100 pm und eine Durchlässigkeit von mindestens 20 Litern pro Minute aufweist.

2. Vorrichtung nach Anspruch 1, **dadurch gekennzeichnet, dass** die Membran (6) aus Zellulose besteht.

3. Vorrichtung nach Anspruch 1 oder 2, **dadurch gekennzeichnet, dass** der Kaskadenimpaktor (3) entsprechend eines menschlichen Atemzugs betreibbar ist.

4. Vorrichtung nach einem der Ansprüche 1 bis 3, **dadurch gekennzeichnet, dass** die Membran (6) eine Durchlässigkeit von mindestens 39 Liter pro Minute und/oder eine Porengröße von 0,45µm.

5. Vorrichtung nach einem der Ansprüche 1 bis 4, **dadurch gekennzeichnet, dass** die Einrichtung zur Messdatenerfassung ein UV - Detektor oder ein Fluoreszenz-Detektor ist.

6. Vorrichtung nach einem der Ansprüche 1 bis 5, **dadurch gekennzeichnet, dass** das Luft-Flüssigkeits-Modell-system temperierbar ist.

7. Vorrichtung nach einem der Ansprüche 1 bis 6, **dadurch gekennzeichnet, dass** dem Luft-Flüssigkeits-Modell-system ein Rührsystem zugeordnet ist, insbesondere ein Magnetrührer (14).

8. Verfahren zur Ermittlung der Lösungsgeschwindigkeit und Freisetzungskinetik von Aerosolformulierungen umfassend die Schritte
(i) des Freisetzens eines zu vermessenden Aerosol aus einem Inhalator (2) mit Hilfe eines Kaskadenimpaktors (3), wobei eine Membran (6) auf einer Filterplatte des Kaskadenimpaktors (3) angeordnet ist und
(ii) dem Erfassen der auf der Membran (6) immobilisierten Partikel mit Hilfe eines Luft-Flüssigkeits-Modellsystems, wobei ein Zwei-Kammersystem verwendet wird, insbesondere eine Diffusionszelle (13) nach Franz, mit einer Einrichtung zur Messdatenerfassung,
wobei eine hydrophile Membran (6) aus einem Material verwendet wird, welches ausgewählt ist der Gruppe bestehend aus Acryl-Copolymer, Polyethylensulfon, Polysulfon, Zellulose, Zellulosederivate, Zelluloseester und regenerierte Zellulose, und die Membran eine maximale Dicke von 100 µm aufweist und die Membran (6) eine Mindestdurchlässigkeit von 20 Litem pro Minute aufweist.

9. Verfahren nach Anspruch 8, **dadurch gekennzeichnet, dass** eine Membran (6) aus Zellulose verwendet wird.

10. Verfahren nach Anspruch 8 oder 9, dadurch gekennzeichet, dass der Kaskadenimpaktor (3) entsprechend eines menschlichen Atemzugs, beispielsweise mit einem Luftstrom von 39 Litern pro Minute über einen Zeitraum von 6,15s, betrieben wird.

11. Verfahren nach einem der Ansprüche 8 bis 10, **dadurch gekennzeichnet, dass** die Membran (6) mit einer Mindestdurchlässigkeit von 30 Litern pro Minute verwendet wird und/oder eine Porengröße von 0,45 µm aufweist.

12. Verfahren nach einem der Ansprüche 8 bis 11, **dadurch gekennzeichnet, dass** als Einrichtung zur Messdatenerfassung ein UV-Detektor oder ein Fluoreszenz-Detektor verwendet wird.

13. Verfahren nach einem der Ansprüche 8 bis 12, **dadurch gekennzeichnet, dass** das Luft-Flüssigkeits-Modellsystem temperiert wird.

14. Verfahren nach einem der Ansprüche 8 bis 13, **dadurch gekennzeichnet, dass** zur Durchmischung eines Mediums ein Rührsystem verwendet wird, insbesondere ein Magnetrührer (14).

## Claims

1. Apparatus for determining the solution rate and release kinetics of aerosol formulations, comprising
(i) a cascade impactor, a membrane and an inhaler (1), which is connected to the cascade impactor (3), the membrane (6) being disposed on a filter plate of the cascade impactor (3) and after being charged with particles in the cascade impactor the membrane (6) being placed in an air-liquid model system, so that the membrane is in contact with a release medium,
(ii) and an air-liquid model system which is a two-chamber system, particularly a Franz diffusion cell (13), which comprises a device for measurement data acquisition, **characterised in that** the membrane (6) consists of a hydrophilic material selected from among acrylic copolymer, polyethylene sulphone, polysulphone, cellulose, cellulose derivatives, cellulose esters and regenerated cellulose, and the membrane has a maximum thickness of 100 pm and a permeability of at least 20 litres per minute.

2. Apparatus according to Claim 1, **characterised in that** the membrane (6) is made of cellulose.

3. Apparatus according to Claim 1 or 2, **characterised in that** the cascade impactor (3) can be operated to correspond to human breathing.

4. Apparatus according to one of Claims 1 to 3, **characterised in that** the membrane (6) has a permeability of at least 39 litres per minute, and/or a pore size of 0.45 µm.

5. Apparatus according to one of Claims 1 to 4, **characterised in that** the device for measurement data acquisition is a UV detector or a fluorescence detector.

6. Apparatus according to one of Claims 1 to 5, **characterised in that** the air-liquid model system can be temperature controlled.

7. Apparatus according to one of Claims 1 to 6, **characterised in that** a stirrer system, particularly a magnetic stirrer (14), is associated with the air-liquid model system.

8. Process for determining the solution rate and release kinetics of aerosol formulations, comprising the steps of
(i) releasing an aerosol that is to be measured from an inhaler (2) by means of a cascade impactor (3), a membrane (6) being disposed on a filter plate in the cascade impactor (3), and
(ii) detecting the particles immobilised on the membrane (6) by means of an air-liquid model system, using a two-chamber system, particularly a Franz diffusion cell (13), with a device for measurement data acquisition,
wherein a hydrophilic membrane (6) is used, made of a material selected from among acrylic copolymer, polyethylene sulphone, polysulphone, cellulose, cellulose derivatives, cellulose esters and regenerated cellulose, and the membrane has a maximum thickness of 100 µm and the membrane (6) has a minimum permeability of 20 litres per minute.

9. Process according to Claim 8, **characterised in that** a membrane (6) made of cellulose is used.

10. Process according to Claim 8 or 9, **characterised in that** the cascade impactor (3) is operated to correspond to human breathing, for example with an airflow of 39 litres per minute over a period of 6.15 seconds.

11. Process according to one of Claims 8 to 10, **characterised in that** the membrane (6) is used with a minimum permeability of 30 litres per minute and/or with a pore size of 0.45 µm.

12. Process according to one of Claims 8 to 11, **characterised in that** a UV detector or a fluorescence detector is used as the device for measurement data acquisition.

13. Process according to one of Claims 8 to 12, **characterised in that** the air-liquid model system is temperature controlled.

14. Process according to one of Claims 8 to 13, **characterised in that** a stirring system, particularly a magnetic stirrer (14), is used to mix a medium.

## Revendications

1. Dispositif servant à déterminer la vitesse de dissolution et la cinétique de libération de formulations d'aérosols, comprenant :
(i) un impacteur en cascade, une membrane et un inhalateur (1), qui est raccordé à l'impacteur en cascade (3), la membrane (6) étant disposée sur une plaque filtrante de l'impacteur en cascade (3) et la membrane (6) étant insérée dans un système de modélisation air-liquide après avoir été chargée en particules dans l'impacteur en cascade de sorte que la membrane est en contact avec un milieu de libération ;
(ii) et un système de modélisation air-liquide, qui est un système à deux caméras, en particulier une cellule de diffusion (13) selon Franz, qui présente un équipement servant à détecter des données de mesure,
**caractérisé en ce que**
la membrane (6) est constituée d'un matériau hydrophile, qui est choisi parmi le groupe constitué de copolymère acrylique, de polyéthylène sulfoné, de polysulfone, de cellulose, de dérivés de cellulose, d'ester de cellulose et de cellulose régénérée, et la membrane présente une épaisseur maximale de 100 pm et une perméabilité d'au moins 20 litres par minute.

2. Dispositif selon la revendication 1, **caractérisé en ce que** la membrane (6) est constituée de cellulose.

3. Dispositif selon la revendication 1 ou 2, **caractérisé en ce que** l'impacteur en cascade (3) peut fonctionner conformément à un souffle humain.

4. Dispositif selon l'une quelconque des revendications 1 à 3, **caractérisé en ce que** la membrane (6) présente une perméabilité d'au moins 39 litres par minute et/ou une taille de pores de 0,45 µm.

5. Dispositif selon l'une quelconque des revendications 1 à 4, **caractérisé en ce que** l'équipement servant à détecter des données de mesure est un détecteur à UV ou un détecteur à fluorescence.

6. Dispositif selon l'une quelconque des revendications 1 à 5, **caractérisé en ce que** le système de modélisation air-liquide peut être tempéré.

7. Dispositif selon l'une quelconque des revendications 1 à 6, **caractérisé en ce qu'**un système d'agitation est associé au système de modélisation air-liquide, en particulier un agitateur magnétique (14).

8. Procédé servant à déterminer la vitesse de dissolution et la cinétique de libération de formulations d'aérosols, comprenant les étapes consistant à :
(i) libérer un aérosol à mesurer d'un inhalateur (2) à l'aide d'un impacteur en cascade (3), une membrane (6) étant disposée sur une plaque filtrante de l'impacteur en cascade (3) ; et
(ii) détecter les particules immobilisées sur la membrane (6) à l'aide d'un système de modélisation air-liquide, un système à deux caméras étant utilisé, en particulier une cellule de diffusion (13) selon Franz, avec un équipement servant à détecter des données de mesure,
une membrane (6) hydrophile en un matériau donné étant utilisée, lequel est choisi parmi le groupe constitué de copolymère acrylique, de polyéthylène sulfoné, de polysulfone, de cellulose, de dérivés de cellulose, d'ester de cellulose et de cellulose régénérée, et la membrane présentant une épaisseur maximale de 100 µm et la membrane (6) présentant une perméabilité minimale de 20 litres par minute.

9. Procédé selon la revendication 8, **caractérisé en ce qu'**une membrane (6) en cellulose est utilisée.

10. Procédé selon la revendication 8 ou 9, **caractérisé en ce que** l'impacteur en cascade (3) fonctionne de manière à correspondre à un souffle humain, par exemple avec un flux d'air de 39 litres par minute sur une durée de 6,15 s.

11. Procédé selon l'une quelconque des revendications 8 à 10, **caractérisé en ce que** la membrane (6) est utilisée avec une perméabilité minimale de 30 litres par minute et/ou présente une taille de pores de 0,45 µm.

12. Procédé selon l'une quelconque des revendications 8 à 11, **caractérisé en ce qu'**un détecteur à UV ou un détecteur à fluorescence est utilisé en tant qu'équipement servant à détecter des données de mesure.

13. Procédé selon l'une quelconque des revendications 8 à 12, **caractérisé en ce que** le système de modélisation air-liquide est tempéré.

14. Procédé selon l'une quelconque des revendications 8 à 13, **caractérisé en ce qu'**un système agitateur est utilisé aux fins du mélange d'un milieu, en particulier un agitateur magnétique (14).
